# EUROPÄISCHE PATENTSCHRIFT

(11) **EP 2 404 043 B1**
(45) Veröffentlichungstag und Bekanntmachung des Hinweises auf die Patenterteilung: **12.04.2017**
(21) Anmeldenummer: 10706543.5
(22) Anmeldetag: 27.02.2010
(51) Int. Cl.: F01N 3/20

(54) **REDUKTIONSMITTELBEHÄLTER**
REDUCING AGENT CONTAINER
RÉSERVOIR D'AGENT DE RÉDUCTION

(30) Priorität: 06.03.2009 DE 102009011518
(43) Veröffentlichungstag der Anmeldung: 11.01.2012
(73) Patentinhaber: Kautex Textron GmbH & Co. KG, 53229 Bonn (DE)
(72) Erfinder: KOLBERG, Ralf, 50321 Brühl (DE); KOUKAN, Ibrahim, 50999 Köln (DE); TREUDT, Volker, 51570 Windeck (DE)
(74) Vertreter: Kierdorf Ritschel Richly
(86) Internationale Anmeldenummer: PCT/EP2010/001231
(87) Internationale Veröffentlichungsnummer: WO 2010/099908

(56) Entgegenhaltungen:
- DE-A1- 19 540 267
- US-A- 4 719 949
- US-A- 4 809 865
- US-A- 4 821 908
- US-A- 5 944 076

## Beschreibung

Die Erfindung betrifft einen Reduktionsmittelbehälter für Kraftfahrzeuge.

In der Fahrzeugtechnik wird häufig das sogenannte SCR-Verfahren angewendet, um bei Dieselfahrzeugen, vor allem bei Nutzfahrzeugen, die Schadstoffemissionen zu senken. Als SCR bezeichnet man die sogenannte Selektive Katalytische Reaktion (Selective Gatalyllc Reduction), bei welcher Stickoxide mittels Ammoniak reduziert werden. Der benötigte Ammoniak wird hierbei beispielsweise in Form einer wässrigen Harnstofflösung vor dem SCR-Katalysator in den Abgasstrang eingespritzt. Aus der Harnstoff-Wasserlössung wird durch eine Hydrolysereaktion Ammoniak und Kohlendioxid. Der Ammoniak kann in einem Katalysator bei entsprechender Temperatur mit den Stickoxiden im Abgas reagieren.

Hierzu ist bei dem betreffenden Fahrzeug ein Reduktionsmittelbehälter für den in wässriger Lösung vorliegenden Harnstoff vorzusehen. Der Harnstoff setzt Ammoniak frei, was zu unangenehmen Geruchssmissionsn führen kann. Die Austrocknung der Lösung geht mit einem starken Kristallwachstum und einer Volumenzunahme einher. Daher müssen im Kraftfahrzeug mitgeführte Reduktionsmittelbehälter gegen Austrocknen gesichert sein. Darüber hinaus muss eine saubere, d. h. saubere Betankung bzw. Befüllung sichergestellt werden.

Anders als flüssige Kohlenwasserstoffe bzw. Kraftstoffe sind wässrige Harnstofflösungen frostgefährdet, sodass entweder sichergestellt werden muss, dass das Reduktionsmittel nicht einfriert oder die hierfür vorgesehenen Behälter müssen so ausgebildet sein, dass eine entsprechende Volumenzunahme des Harnstoffs, insbesondere bei Fahrzeugstillstand, kompensiert werden kann.

Darüber hinaus ist wie bei jedem Betriebsstoffbehälter eine entsprechende Be- und Entlüftung des Behälters, insbesondere eine Entlüftung des Behälters bei Befüllung sicherzustellen. Es ist grundsätzlich denkbar und möglich, Reduktionsmittelbehälter über an diesen zwangsläufig vorzusehenden Befüllöffnungen zu entlüften. Bei außen an einem Kraftfahrzeug vorzusehenden Behältern, wie das beispielsweise bei Lastkraftwagen der Fall ist, stellt dies kaum ein Problem dar. Lediglich die Geruchsbelästigung bei der Befüllung ist weniger wünschenswert. Bei Einsatz von Reduktionsmittelbehältern im Pkw ist dies jedoch eher problematisch. Beim Pkw ist in der Regel eine Befüllung/Nachfüllung des Reduktionsmittelbehälters im Abstand der regulären Service-Intervalle während eines Werkstattaufenthalts vorgesehen. Da die Service-Intervalle heutzutage verhältnismäßig groß sein können, hat das Reduktionsmittel beim Pkw eine höhere Verweilzeit im Reduktionsmittelbehälter, als dies bei Lkw der Fall wäre. Hierdurch ergeben sich in der Regel höhere Ammoniakkonzentrationen und damit einhergehend kann unter Umständen eine höhere Geruchsbelästigung eintreten.

Darüber hinaus ist es bei der Befüllung von Reduktionsmittelbehältern, insbesondere aus Gründen der Volumenzunahme beim Einfrieren von flüssigem Harnstoff wünschenswert, eine bestimmte Füllmenge nicht zu überschreiten.

Aus der US 4, 821, 908 A ist ein Kraftstoffbehälter mit einem OVR-System (onboard refueling vapor recovery system) bekannt, bei welchem ein Umschaltventil zur Umschaltung von Betriebsentlüftung auf Betankungsentlüftung über einen Bowdenzug betätigt wird, der mit einer den Einfüllstutzen verschließenden Klappe so verbunden ist, dass das in das Einfüllrohr eingeführte Zapfventil das Entlüftungsventil betätigt und so eine Betankungsentlüftung ermöglicht.

In dem Entlüftungsventil ist ein federbelastetes Schwlmmerventil vorgesehen, dass das Kraftstoffdampffilter bei einem im Behälter ansteigenden Flüssigkeitsspiegel vor Eindringen der Flüssigkeit schützt. Zusätzlich Ist an den Behälter eine Betriebsentlüftungsleitung angeschlossen, die mit einem Im Behälterinneren vorgesehenen Schwimmerventil verschlossen ist. Dieses Schwimmerventil dient außerdem als Überschlagsicherungsventil (roll-over-Ventil). Das in der US 4,821,908 A beschriebene Entlüftungsventil Ist nicht ohne Weiteres auf einen Harnstoffbehälter übertragbar. Die Funktionssicherheit wäre bei einem solchen Behältern nicht gewährleistet.

Andere Entlüftungssysteme für Kraftstoffbehälter sind beispielsweise aus der US 4,719,949 A, aus der US 5,944,076 A, aus der DE 195 40 267 A1 sowie aus der US 4,809,865 A bekannt. Sämtliche Systeme sind nicht ohne Weiteres zur Entlüftung von Reduktionsmittelbehältern für wässrige Harnstofflösung geeignet.

Der Erfindung liegt daher die Aufgabe zugrunde, einen Reduktionsmittelbehälter für Kraftfahrzeuge zu schaffen, der so ausgebildet ist, dass er eine einfache und saubere Befüllung ermöglicht, wobei eine Übertankung des Reduktionsmittelbehälters sowohl aus hygienischen Gründen als auch aus Frostschutzgründen verhindert werden soll.

Die Aufgabe wird gelöst durch einen Reduktionsmittelbehälter als Behälter für eine wässrige Harnstofflösung mit den Merkmalen des geltenden Anspruchs 1. Vorteilhafte Ausgestaltungen der Erfindung ergeben sich aus den Unteransprüchen.

Die erfindungsgemäße Ausgestaltung des Reduktionsmittelbehälters besitzt den Vorzug, dass verschiedene Wege jeweils für die Befüllung und die Entlüftung vorgesehenen sind und dass eine Befüllentlüftungsleitung, die in der erfindungsgemäßen Art und Weise an den Reduktionsmittelbehälter angeschlossen ist während der Befüllung des Reduktionsmittelbehälters nahezu drucklos offen sein kann. Dies hat Insbesondere auch den Vorzug, dass die Befüllentlüftungsleitung an ihrem von dem Reduktionsmittelbehälter abliegenden Ende verschließbar ist. Auf diese Art und Weise können bewegte Teile wie beispielsweise Ventile in dem Reduktionsmittelbehälter vermieden werden. Dies trägt insbesondere dem Umstand Rechnung, dass in die Befüllentlüftungsleitung hineintretender Harnstoff auskristallisieren kann und ggf. die Befüllentlüftungsleitung verstopfen kann oder dort vorgesehene bewegliche Teile im Bereich des Behälteranschlusses zusetzen kann.

Zweckmäßigerweise ist vorgesehen, dass die Befüllentlüftungsleitung einen von dem durch den Einfüllstutzen gebildeten Befüllkanal zumindest weitestgehend getrennten Entlüftungspfad bildet. Auf diese Art und Weise lässt sich eine glucker- und spritzfreie Befüllung ohne Rückschwall erzielen.

Bel einer Variante des Reduktionsmittelbehälters nach der Erfindung kann vorgesehen sein, dass die Befüllentlüftungsleitung füllstandsbetätigt verschließbar ist. Dies kann selbstverständlich über entsprechende durch den Flüssigkeitsspiegel betätigte Schaltorgane erfolgen.

Besonders bevorzugt wird allerdings eine Variante, bei der die Befüllentlüftungsleitung mit einem als Tauchrohr ausgebildeten Fortsatz in den Bereich des maximalen Füllstandes im Inneren des Behälters geführt ist, sodass diese bei Erreichen des maximal zulässigen Füllstandes durch den Flüssigkeitsspiegel verschlossen wird. Hierdurch wird ggf. bei einer weiteren Befüllung des Reduktionsmittelbehälters ein Anstieg der Flüssigkeitssäule Im Einfüllrohr bewirkt. Diese kann entweder zur Abschaltung eines Zapfventils oder zum Verschließen eines Befüllgebindes führen. Wird beispielsweise aus einem Gebinde wie einer Flasche oder dergleichen befüllt, verschließt die im Einfüllrohr ansteigende Flüssigkeitssäule die Öffnung des Gebindes und verhindert dessen Belüftung und somit dessen weitere Entleerung.

Besonders vorteilhaft ist es, wenn der Reduktionsmittelbehälter gemäß der Erfindung keine bewegbaren Einbauten aufweist.

An dem Reduktionsmittelbehälter gemäß der Erfindung ist wenigstens ein die Befüllentlüftungsleitung gegenüber der Atmosphäre verschließendes Ventil vorgesehen, welches vorzugsweise mit Abstand zu dem Behälteranschluss der Befüllentlüftungsleitung angeordnet ist. Ein solches Ventil verhindert zuverlässig das Austrocknen der in dem Reduktionsmittelbehälter vorzusehenden wässrigen Lösung.

Das Ventil wird federbelastet in der die Befüllentlüftungsleitung verschließenden Stellung gehalten. Dies kann beispielsweise durch ein Federelement im eigentlichen Sinne bewerkstelligt werden.

Erfindungsgemäß ist vorgesehen" dass das Ventil mittels eines Bowdenzuges betätigbar ist.

Besonders zweckmäßig ist es, wenn das Ventil als Umschaltventil ausgebildet ist, welches in der die Befüllentlüftungsleitung verschließenden Stellung eine Entnahmebelüftungsleitung und/oder eine Betriebsentlüftungsleitung freigibt.

Der Reduktionsmittelbehälter gemäß der Erfindung kann beispielsweise als extrusionsblasgeformter Behälter aus thermoplastischem Kunststoff ausgebildet sein. Dieser kann so hergestellt worden sein, dass wenigstens das Einfüllrohr und Teile der Befüllentlüftung einstückig an den Behälter angeformt sind. Der Reduktionsmittelbehälter gemäß der Erfindung kann ein- oder mehrschichtig aus thermoplastischem Kunststoff extrusionsblasgeformt sein.

Die Erfindung wird nachstehend anhand eines in den Zeichnungen dargestellten Ausführungsbeispiels erläutert.

Es zeigen:
- Figur 1: eine erste Variante des Reduktionsmlttelbehältersgemäß der Erfindung, wobei nur Teile des Reduktionsmittelbehälters dargestellt sind,
- Figur 2: ein zweites Ausführungsbeispiel des Reduktionsmittelbehälters gemäß der Erfindung, wobei der Behälter stark vereinfacht dargestellt ist,
- Figur 3: den Reduktionsmittelbehälter nach einem dritten Ausführungsbeispiel der Erfindung,
- Figur 4: den Reduktionsmittelbehälter der Erfindung nach einem vierten Ausführungsbeispiel,
- Figur 5: ein fünftes Ausführungsbeispiel des Reduktionsmittelbehälters gemäß der Erfindung,
- Figur 6: ein sechstes nicht erfindungsgemäßes Beispiel eines Reduktionsmittelbehälters ,
- Figur 7: ein siebtes Ausführungsbeispiel des Reduktionsmittelbehälters gemäß der Erfindung,
- Figur 8: ein achtes nicht erfindungsgemäßes Beispiel eines Reduktionsmittelbehälters ,
- Figur 9: einen Reduktionsmittelbehälter nach einem nicht erfindungsgemäßen Beispiel und

- Figur 10: eine weitere Variante eines nicht erfindungsgemäßen Reduktionsmittelbehälters.

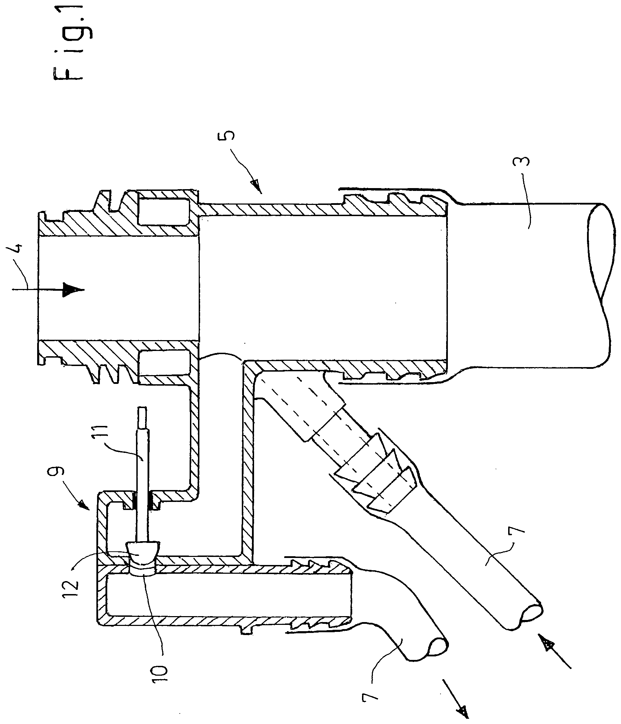

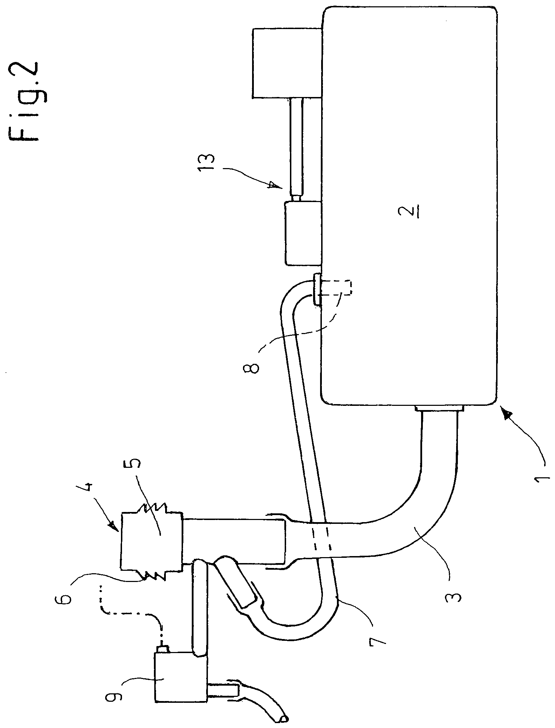

Es wird zunächst Bezug genommen auf Figur 2, die einen Reduktionsmlttelbehälter 1 gemäß der Erfindung vollständig in schematischer Darstellung zeigt. Der Reduktionsmittelbehälter 1 gemäß der Erfindung umfasst das eigentliche allseits umschlossene Füllvolumen 2 und ein an dieses Füllvolumen angeschlossenes Einfüllrohr 3 mit einer Einfüllöffnung 4, welche an einem Einfüllkopf 5 vorgesehen ist. Der Einfüllkopf 5 Ist in Figur 1 vergrößert und teilweise im Schnitt dargestellt. Die Ausführungsbeispiele nach den Figuren 1 und 2 unterscheiden sich jedoch, wie nachstehend noch beschrieben wird.

Der Reduktionsmittelbehälter gemäß der Erfindung ist zweckmäßigerweise als extrusionsblasgeformter Kunststoffbehälter ausgebildet und dient der Aufnahme eines flüssigen Reduktionsmittels in Form einer wässrigen Harnstofflösung, die dem Abgas eines Dieselfahrzeugs vor einem sogenannten SCR-Katalysator zugeführt wird bzw. dort eingespritzt wird.

Die Figuren zeigen den Reduktionsmittelbehälter 1 grundsätzlich in Einbaulage. Wie dies der Figur 2 zu entnehmen ist, ist das Einfüllrohr 3 dort etwa im in Einbaulage des Reduktionsmittelbehälters 1 unteren Bereich desselben an diesen angeschlossen. Eine solche Variante wird auch als Unterflurbefüllung bezeichnet.

Der Einfüllkopf 5 ist mit einem Gewindekragen 6 versehen, auf den eine nicht dargestellte Verschlusskappe aufschraubbar ist. Der Einfüllkopf 5 ist als Leitungsverzweigung für eine Befüllentlüftungsleitung 7 ausgebildet, die an der Oberseite des Reduktionsmittelbehälters 1 an diesen angeschlossen ist. Die Einfüllöffnung 4 ist so dimensioniert, dass eine Befüllung über eine Zapfeinrichtung oder ein Gebinde erfolgen kann, wobei eine Tülle oder ein Stutzen der Zapfeinrichtung oder eines Gebindes soweit In den Einfüllkopf 5 hereinragt, dass dieser unterhalb des Anschlusses der Befüllentlüftungsleitung 7 in den Einfüllkopf 5 mündet. Auf diese Art und Weise ist sichergestellt, dass der von der Befüllentlüftungsleitung 7 gebildete Entlüftungspfad vollständig von dem durch das Einfüllrohr 3 gebildeten Befüllpfad getrennt ist.

Die Befüllentlüftungsleitung 7 ist an ihrem in das Füllvolumen 2 hineinragenden Ende mit einem Tauchrohr 8 versehen, welches die Höhe des Flüssigkeitsspiegels innerhalb des Füllvolumens 2 und damit die maximale Füllhöhe des Reduktionsmittelbehälters 1 definiert.

Die Befüllentlüftungsleitung 7 erstreckt sich vom oberen Ende des Füllvolumens 2 zum Einfüllkopf 5 und von dort zu einem Schaltventil 9. Mittels des Schaltventils 9 ist die Befüllentlüftungsleitung 7 und somit der Entlüftungspfad nach Abschluss des Befüllvorgangs verschließbar.

Es wird nun zunächst Bezug genommen auf die Figur 1, in welcher der Einfüllkopf 5 und das daran angeordnete Schaltventil 9 vergrößert dargestellt sind. Die Figur 1 zeigte eine erste Variante des Schaltventils 9, bei der das Schaltventil 9 mittels einer nicht dargestellten Verschlusskappe für das Einfüllrohr 3 betätigbar ist. Das Schaltventil 9 umfasst eine Ventilöffnung 10, die mit einem am Ende eines Stößels 11 vorgesehenen Ventilkörper 12 verschließbar ist. Die Ventilöffnung 10 befindet sich Innerhalb des durch die Befüllentlüftungsleitung 7 definierten Entlüftungspfades, wobei diese oberhalb des maximal möglichen Flüssigkeitsspiegels innerhalb des Einfüllrohres 3 bzw. des Einfüllkopfes 5 angeordnet ist. Hierdurch ist jedenfalls gewährleistet, dass in den Bereich des Schaltventils 9 keine flüssige Harnstofflösung gelangt. In Strömungsrichtung hinter dem Schaltventil 9 kommuniziert die Befüllentlüftungsleitung 7 mit der Atmosphäre.

In Figur 1 ist der Ventilkörper 12 in geöffneter, d. h. die Ventilöffnung 10 freigebender Stellung dargestellt. Der Ventilkörper 12 kann beispielsweise federbelastet in der geöffneten Stellung gehalten werden.

Wird eine Verschlusskappe auf den Gewindekragen 6 des Einfüllkopfs 5 aufgeschraubt, so kann dies beispielsweise den Ventilstößel 11 mechanisch betätigen und den Ventilkörper 12 in die Ventilöffnung 10, die einen Ventilsitz bildet, drücken, sodass der Entlüftungspfad verschlossen ist.

Bei der in Figur 2 gezeigten Variante des Reduktionsmittelbehälters 1 ist die Betätigung des Schaltventils 9 mittels eines andeutungsweise dargestellten Bowdenzuges vorgesehen. Im Übrigen entspricht das Konstruktionsprinzip des Reduktionsmittelbehälters nach dem zweiten Ausführungsbeispiel in Figur 2 demjenigen nach dem ersten Ausführungsbeispiel.

Mit 13 ist in Figur 2 ein Druckausgleichselement als Entnahmebelüftungseinrichtung und/oder als eine Betriebsentlüftungseinrichtung bezeichnet. Das Druckausgleichselement 13 stellt mittels Ventilen oder dergleichen eine Belüftung des Reduktionsmittelbehälters bei Entnahme von Reduktionsmittel sicher. Wenn kein Reduktionsmittel entnommen wird, findet je nach Druckgefälle zur Umgebung eine Belüftung oder Entlüftung statt. Eine Entnahmeleitung ist aus Gründen der Vereinfachung nicht dargestellt.

Bei der Befüllung des Reduktionsmittelbehälters 1 durch die Einfüllöffnung 4 des Einfüllrohres 3 wird zunächst der Flüssigkeitsspiegel im Füllvolumen 2 ansteigen, wobei das innerhalb des Reduktionsmittelbehälters 1 vorgesehene Gasvolumen über die Befüllentlüftungsleitung 7 via Einfüllkopf 5 und via Schaltventil 9 an die Atmosphäre abgegeben wird. Der Atmosphärenanschluss der Befüllentlüftungsleitung 7 ist zweckmäßigerweise soweit von der Einfüllöffnung 4 entfernt, dass für denjenigen, der den Reduktionsmittelbehälter 1 befüllt, keine Geruchsbelästigung entsteht.

Die Entlüftung des Reduktionsmittelbehälters 1 ist solange möglich, bis der Flüsslgkeltsspiegel das Tauchrohr 8 der Befüllentlüftungsleitung 7 verschließt. Sodann bewirkt eine weitere Befüllung ein Ansteigen der Flüssigkeitssäule innerhalb des Einfüllrohres 3. Bei Betankung mittels Zapfeinrichtung würde die ansteigende Flüssigkeitssäule eine Schnüffelbohrung einer Zapfpistole verschließen und den Betankungsvorgang unterbrechen. Bei Betankung mittels Gebinde, beispielsweise mittels der sogenannten Kruseflasche, würde die ansteigende Flüssigkeit den Hals des Gebindes verschließen, sodass dieses nicht mehr belüftet würde und weitere Flüssigkeit nicht mehr nachfließen kann. Somit ist eine Übertankung des Reduktionsmittelbehälters 1 gemäß der Erfindung schwer möglich. Nach Abschluss des Betankungsvorgangs bzw. Befüllvorgangs würde die Einfüllöffnung 4 verschlossen und das Schaltventil 9 dabei so betätigt, dass ein Austrocknen des Reduktionsmittelbehälters 1 zuverlässig vermieden wird. Über das Druckausgleichselement 13 kann eine Belüftung des Reduktionsmittelbehälters 1 soweit wie Reduktionsmittel entnommen wird, sichergestellt werden. Dies ist entweder über Pilzventile, federbelastete Ventilkörper oder dergleichen möglich. Auch bei der in Figur 2 dargestellten Variante des Reduktionsmittelbehälters 1 sind das Schaltventils 9 und der von dem Einfüllkopf 5 abgehende Teil der Befüllentlüftungsleitung 7 oberhalb des maximal möglichen Füllstandsspiegels im Einfüllrohr 3 angeordnet.

An dieser Stelle sei erwähnt, dass in allen Ausführungsbeispielen gleiche Bauteile wenn möglich mit gleichen Bezugszeichen bezeichnet sind.

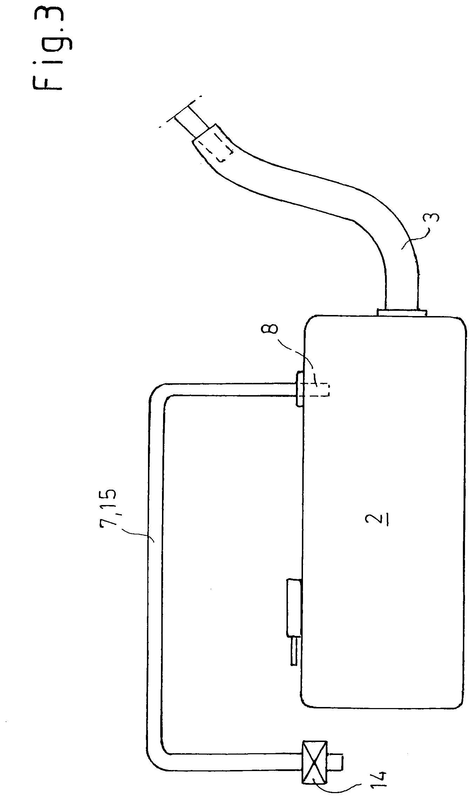

Bei der in Figur 3 dargestellten Variante des Reduktionsmittelbehälters gemäß der Erfindung ist die Befüllentlüftungsleitung 7 offen an das Füllvolumen 2 angeschlossen. Ein Ventil 14 ist am atmosphärenseitigen Ende der Befüllentlüftungsleitung 7 vorgesehen. Die Befüllentlüftungsleitung 7 umfasst einen oberen Leitungsabschnitt 15, der sich oberhalb des maximalen Füllstandes im Einfüllrohr 3 erstreckt. Gegenüber dem zuvor beschriebenen Ausführungsbeispiel hat diese Variante des Reduktionsmittelbehälters 1 den Vorzug eines geringeren Bauraumbedarfs im Tankdeckelbereich. Darüber hinaus wird die Leitungsführung zum Einfüllkopf 5 eingespart.

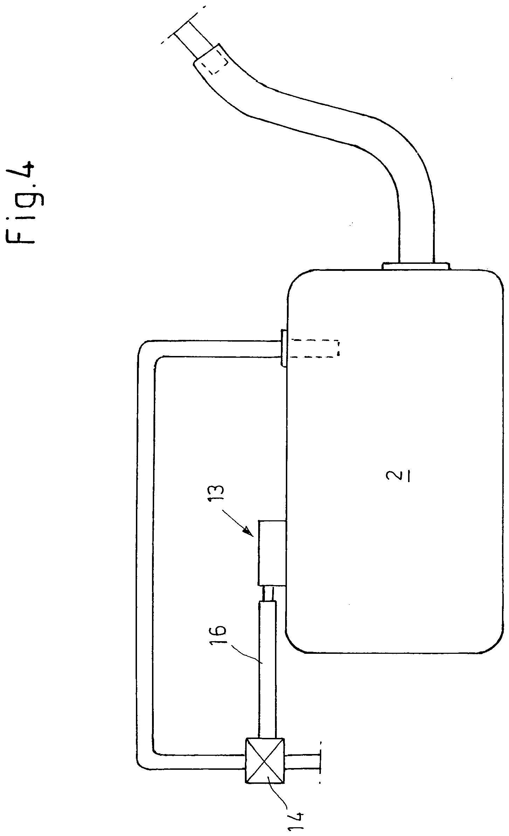

Die in Figur 4 dargestellte Variante des Reduktionsmittelbehälters 1 gemäß der Erfindung unterscheidet sich von derjenigen in Figur 3 gezeigten Variante dadurch, dass das Ventil 14 als 3-Wege-Ventil ausgebildet ist und dass an dieses eine Belüftungsleitung 16 des druckausgleichselements 13 angeschlossen ist. Hierdurch wird in einfacher Art und Weise eine Wechselschaltung zwischen dem Betriebszustand des Reduktionsmittelbehälters (Entnahme) und der Befüllentlüftung realisiert.

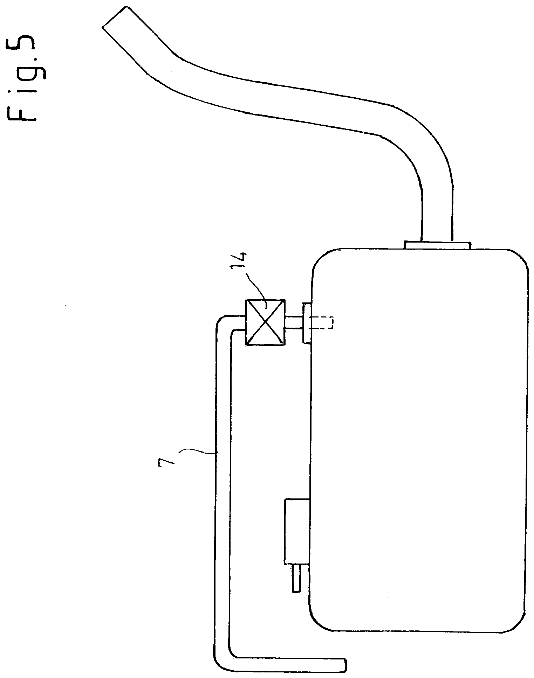

Die in Figur 5 dargestellte Variante des Reduktionsmittelbehälters 1 gemäß der Erfindung entspricht im Prinzip derjenigen Variante des Reduktionsmittelbehälters 1, die in Figur 3 dargestellt ist, wobei sich das Ventil 14 im Bereich des Füllvolumens 2, Jedoch mit hinreichendem Abstand zu dem Füllvolumen 2 befindet.

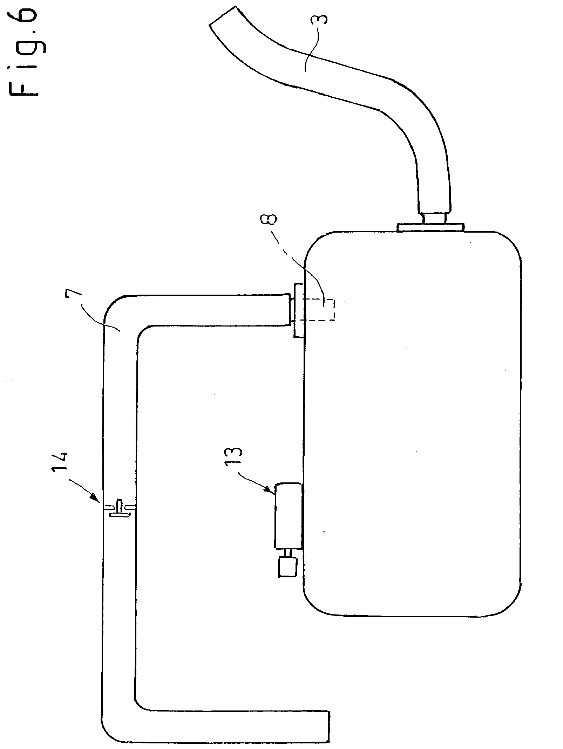

Bei der In Figur 6 dargestellten Variante eines nicht erfindungsgemäßen Reduktionsmittelbehälter ist in der Befüllentlüftungsleitung 7 ein federbelastetes Ventil 14 vorgesehen, das beispielsweise als sogenanntes Pilzventil ausgebildet ist, welches aufgrund der Elastizität seines Ventilkörpers in der geschlossenen Stellung gehalten wird und sich nur bei entsprechendem Druckanstieg in dem Füllvolumen 2 öffnet. Bei dieser Variante ist es erforderlich, das Druckausgleichselement 13 mit einem Druckhalteventil auszustatten, sodass der Reduktionsmittelbehälter 1 nicht drucklos ist. Nach Abschaltung bzw. Abbruch des Einfüllvorgangs über das Tauchrohr 8 der Befüllentlüftungsleitung 7 übt die noch im Einfüllrohr 3 anstehende Flüssigkeitssäule einen Druck im Inneren des Reduktionsmittelbehälters aus. Die Druckhaltefunktion des Druckausgleichselements 13 dient dabei als Übertankungsschutz.

Diese Variante des Reduktionsmittelbehälters 1 ist besonders kostengünstig, da kein Schaltventil erforderlich ist und größere Freiräume bei der Verlegung der Befüllentlüftungsleitung gegeben sind.

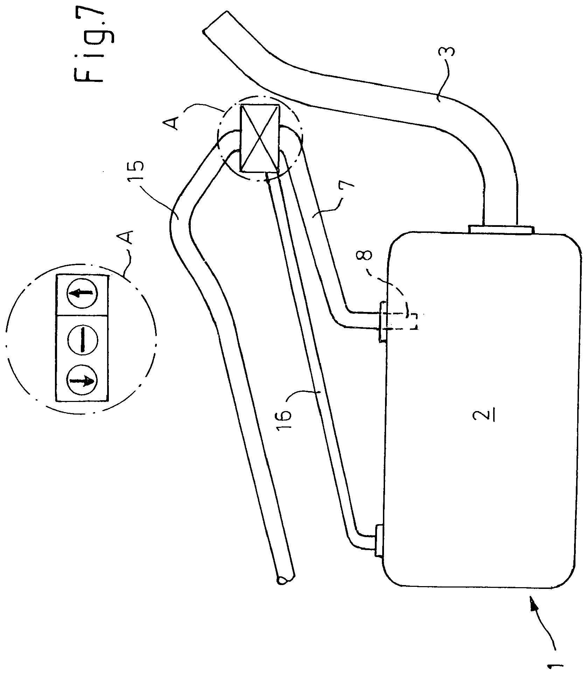

Bei einem Ausführungsbeispiel der Erfindung gemäß Figur 7 ist ein Ventil 14 in der Befüllentlüftungsleitung 7 vorgesehen, welches als 3-Wege-Ventil ausgebildet Ist, an welches auch die Belüftungsleitung 16 angeschlossen ist. Das Ventil 14 hat zwei Schaltstellungen, die symbolisch in Figur 7 hervorgehoben sind (Vergrößerung A), wobei der linke Teil der Darstellung die Betriebsentlüftung und der rechte Teil der Darstellung die Befüllentlüftung symbolisiert. Das Ventil 14 kann ebenso wie nach dem ersten Ausführungsbeispiel der Erfindung in räumlicher Nähe zu einem Einfüllkopf 5 so angeordnet sein, dass beispielsweise eine wechselseitige Schaltung mechanisch über eine Verschlusskappe möglich ist. Das Ventil kann beispielsweise als Ventilkörper zwei gegensinnig wirkende Pilzventile umfassen. Im Falle der Befüllung des Reduktionsmittelbehälters 1 ist der Weg der Befüllentlüftungsleitung 7 an die Atmosphäre freigeschaltet, wohingegen die Belüftungsleitung 16 verschlossen ist. Im Falle des Betriebs kann der Pfad über die Befüllentlüftungsleitung 7 an die Atmosphäre verschlossen sein, wohingegen der Pfad von der Atmosphäre über die Belüftungsleitung 16 in das Füllvolumen 2 geöffnet sein kann. In diesem Fall muss das Ventil 14 mit einer Druckhaltefunktion ausgestattet sein, um ein Austrocknen des Füllvolumens 2 zu verhindern. Auch bei dieser Variante des Reduktionsmittelbehälters 1 gemäß der Erfindung ist ein Leitungsabschnitt 15 der Befüllentlüftungsieltung 7 oberhalb des maximalen Füllstands im Einfüllrohr 3 angeordnet.

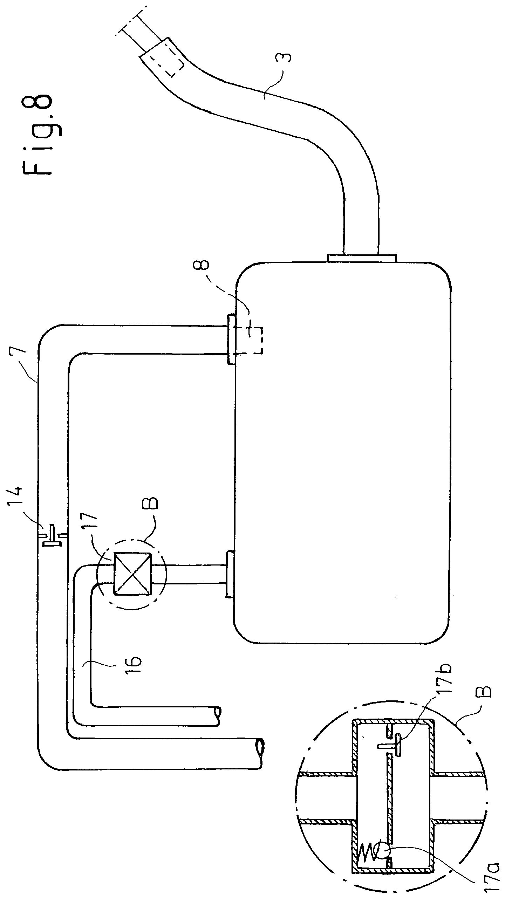

Bei der in Figur 8 dargestellten nicht erfindungsgemäßen Variante des Reduktionsmittelbehälters 1 Ist sowohl ein Ventil 14 in der Befüllentlüftungsleitung 7 als auch ein Ventil 17 in der Belüftungsleitung 16 vorgesehen. Eine schematische Ansicht des Ventils 17 der Belüftungsleitung 16 ist in der Ansicht B vergrößert dargestellt, Das Ventil 17 umfasst einen ersten Ventilkörper 17a und einen zweiten Ventilkörper 17b, wobei der erste Ventilkörper 17a als federbelastete Kugel und der zweite Ventilkörper 17b als Pilzventil ausgebildet sind. Mit dem ersten Ventilkörper 17a wird eine Druckhaitefunktion für den Reduktionsmittelbahälter 1 realisiert, der zweite Ventilkörper 17b ermöglicht die Belüftung des Füllvolumens bei Entnahme von Reduktionsmittel.

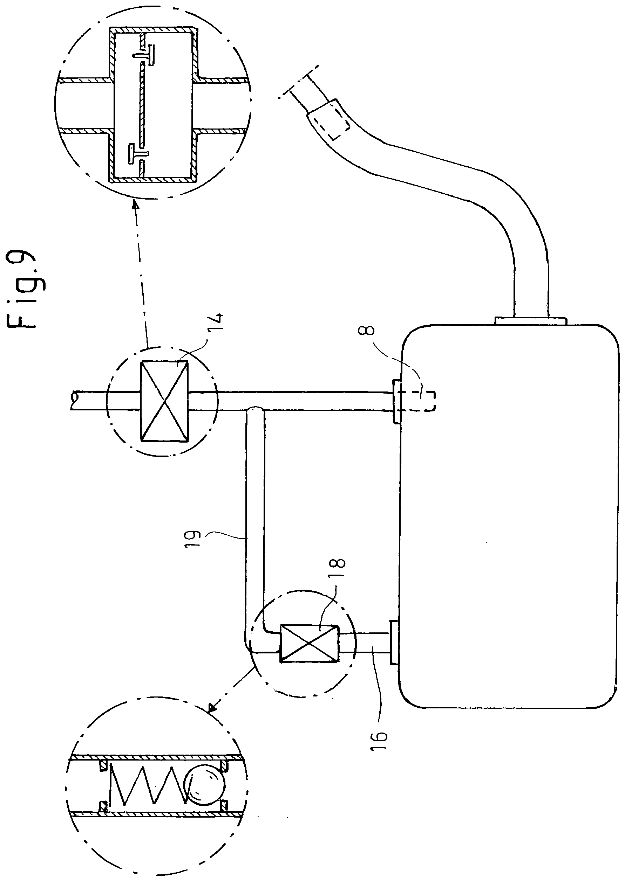

Eine weitere Variante eines nicht erfindungsgemäßen Reduktionsmittelbehälters ist schließlich in
Figur 9 dargestellt. Dort ist in der Befüllentlüftungsleitung 7 oberhalb der Watlinie des Kraftfahrzeugs ein Ventil 14 als Doppelpilzventil angeordnet, welches sowohl die Entlüftung als auch die Belüftung des Reduktionsmittelbehälters 1 zulässt. In der mit 16 bezeichneten Belüftungsleitung Ist ein Ventil 18 mit Druckhaltefunktion als federbelastetes Kugelventil vorgesehen. Der sich horizontal erstreckende Leitungsabschnitt 19 der Belüftungsleitung 16 erstreckt sich oberhalb des maximalen Füllstandes innerhalb des Einfüllrohres 3.

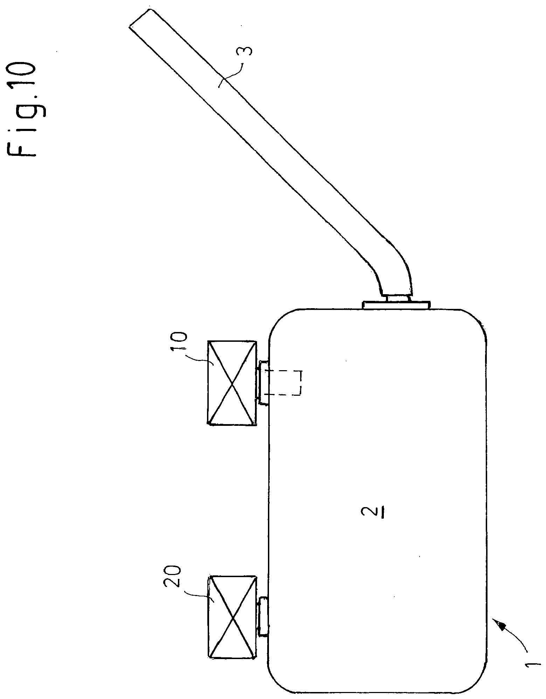

Bei der in Figur 10 dargestellten Variante eines nicht erfindungsgemäßen Reduktionsmittelbehälters wird die Befüllentlüftung und die Betriebsentlüftung jeweils mittels einer Membrane 20 bewerkstelligt.

### Bezugszeichenliste

- 1: Reduktionsmittelbehälter
- 2: Füllvolumen
- 3: Einfüllrohr
- 4: Einfüllöffnung
- 5: Einfüllkopf
- 6: Gewindekragen
- 7: Befüllentlüftungsleitung
- 8: Tauchrohr
- 9: Schaltventil
- 10: Ventilöffnung
- 11: Ventilstößel
- 12: Ventilkörper
- 13: Druckausgleichselement
- 14: Ventil
- 15: Leitungsabschnitt
- 16: Belüftungsleitung
- 17: Ventil
- 17a: erster Ventilkörper
- 17b: zweiter Ventilkörper
- 18: Ventil
- 19: Leitungsabschnitt

## Patentansprüche

1. Reduktionsmittelbehälter für Kraftfahrzeuge als Behälter für eine wässerige Harnstofflösung mit wenigstens einem mit einer Einfüllöffnung (4) versehenen Einfüllrohr (3), mit wenigstens einer Einrichtung zur Befüllentlüftung und mit Mitteln zur Füllstandsbegrenzung bei der Befüllung, wobei die Einrichtung zur Befüllentlüftung wenigstens eine Befüllentlüftungsleitung (7) umfasst, die sich zumindest abschnittsweise oberhalb des maximalen Füllstandes im Einfüllrohr und/oder im Behälter erstreckt, **dadurch gekennzeichnet,**
**dass** das Reduktionsmittelbehälter wenigstens ein die Befüllentlüftungsleitung
gegenüber der Atmosphäre verschließendes Ventil (9, 14) umfasst, welches mit
Abstand zu dem Behälteranschluss der Befüllentlüftungsleitung (7) angeordnet Ist, wobei das Ventil (9, 14) federbelastet in der die Befüllentlüftungsleitung (7) verschließenden Stellung gehalten wird und das Ventil (9, 14) mittels eines Bowdenzuges betätigbar ist.

2. Reduktionsmittelbehälter nach Anspruch 1, **dadurch gekennzeichnet, dass** die Befüllentlüftungsleitung (7) einen von dem durch das Einfüllrohr (3) gebildeten Befüllkanal zumindest weitestgehend getrennten Entlüftungspfad bildet.

3. Reduktionsmittelbehälter nach einem der Ansprüche 1 oder 2, **dadurch gekennzeichnet, dass** die Befüllentlüftungsleitung (7) füllstandsbetätigt verschließbar ist.

4. Reduktionsmittelbehälter nach einem der Ansprüche 1 bis 3, **dadurch gekennzeichnet, dass** die Befüllentlüftungsleitung (7) mit einem als Tauchrohr (8) ausgebildeten Fortsatz in dem Bereich des maximalen Füllstandes im Inneren des Behälters geführt ist, sodass diese bei Erreichen des maximal zulässigen Füllstands durch den Flüssigkeitsspiegel verschlossen wird.

5. Reduktionsmittelbehälter nach einem der Ansprüche 1 bis 4, **dadurch gekennzeichnet, dass** das Ventil (9, 14) als Umschaltventil ausgebildet ist, welches in der die Befüllentlüftungsleitung (7) verschließenden Stellung eine Entnahmebelüftungs- und/oder Betriebsentlüftungsleitung (16) freigibt.

## Claims

1. Reducing agent tank for motor vehicles as a tank for an aqueous urea solution, having at least one filler pipe (3) which is provided with a filler opening (4), having at least one device for filling deaeration and having means for limiting the fill level during filling, with the device for filling deaeration comprising at least one filling deaeration line (7) which extends at least in sections above the maximum fill level in the filler pipe and/or in the tank, **characterized in that** the reducing agent tank comprises at least one valve (9, 14) which closes off the filling deaeration line with respect to the atmosphere and which is arranged at a distance from the tank connection of the filling deaeration line (7), wherein the valve (9, 14) is held in spring-loaded fashion in the position in which the filling deaeration line (7) is closed off and the valve (9, 14) can be actuated by means of a Bowden cable.

2. Reducing agent tank according to Claim 1, **characterized in that** the filling deaeration line (7) forms a deaeration path which is at least substantially separate from the filling duct formed by the filler pipe (3).

3. Reducing agent tank according to one of Claims 1 or 2, **characterized in that** the filling deaeration line (7) can be closed off in a fill-level-actuated manner.

4. Reducing agent tank according to one of Claims 1 to 3, **characterized in that** the filling deaeration line (7) is guided with a projection, which is formed as an immersion pipe (8), in the region of the maximum fill level in the interior of the tank, such that when the maximum admissible fill level is reached, said filling deaeration line (7) is closed off by the liquid level.

5. Reducing agent tank according to one of Claims 1 to 4, **characterized in that** the valve (9, 14) is designed as a switching valve which, in the position in which the filling deaeration line (7) is closed off, opens up a withdrawal aeration and/or operational deaeration line (16).

## Revendications

1. Réservoir d'agent de réduction pour véhicules automobiles en tant que réservoir pour une solution d'urée aqueuse comprenant au moins un tube de remplissage (3) pourvu d'une ouverture de remplissage (4), au moins un dispositif de désaérage du remplissage et des moyens de limitation du niveau lors du remplissage, le dispositif de désaérage du remplissage comprenant au moins une conduite de désaérage du remplissage (7) qui s'étend au moins en partie au-dessus du niveau maximum dans le tube de remplissage et/ou dans le réservoir, **caractérisé en ce que** le réservoir d'agent de réduction comprend au moins une soupape (9, 14) fermant la conduite de désaérage de remplissage par rapport à l'atmosphère, laquelle est disposée à distance du raccord de la conduite de désaérage de remplissage (7) avec le réservoir, la soupape (9, 14) étant retenue de manière sollicitée par ressort dans la position fermant la conduite de désaérage de remplissage (7) et la soupape (9, 14) pouvant être actionnée au moyen d'un câble Bowden.

2. Réservoir d'agent de réduction selon la revendication 1, **caractérisé en ce que** la conduite de désaérage de remplissage (7) forme un chemin de désaérage au moins essentiellement séparé du canal de remplissage formé par le tube de remplissage (3).

3. Réservoir d'agent de réduction selon l'une quelconque des revendications 1 ou 2, **caractérisé en ce que** la conduite de désaérage de remplissage (7) peut être fermée par commande du niveau de remplissage.

4. Réservoir d'agent de réduction selon l'une quelconque des revendications 1 à 3, **caractérisé en ce que** la conduite de désaérage de remplissage (7) est guidée à l'intérieur du réservoir avec une partie saillante réalisée sous forme de tube plongeant (8) dans la région du niveau de remplissage maximum, de sorte que celle-ci soit fermée par le niveau de liquide une fois atteint le niveau de remplissage maximum admissible.

5. Réservoir d'agent de réduction selon l'une quelconque des revendications 1 à 4, **caractérisé en ce que** la soupape (9, 14) est réalisée sous forme de soupape de commutation qui, dans la position fermant la conduite de désaérage de remplissage (7), libère une conduite de ventilation de prélèvement et/ou de purge de service (16).
